# EUROPÄISCHE PATENTSCHRIFT

(11) **EP 4 268 351 B1**
(45) Veröffentlichungstag und Bekanntmachung des Hinweises auf die Patenterteilung: **21.10.2026**
(21) Anmeldenummer: 22702604.4
(22) Anmeldetag: 14.01.2022
(51) Int. Cl.: H02K 15/095, H02K 1/14, H02K 15/022

(54) **VERFAHREN UND VORRICHTUNG ZUM HERSTELLEN EINES STATORS FÜR EINEN BÜRSTENLOSER GLEICHSTROMMOTOR**
METHOD AND APPARATUS FOR PRODUCING A STATOR FOR A BRUSHLESS DIRECT CURRENT MOTOR
PROCÉDÉ ET APPAREIL DE FABRICATION D'UN STATOR POUR UN MOTEUR À COURANT CONTINU SANS BALAIS

(30) Priorität: 28.01.2021 DE 102021101911
(43) Veröffentlichungstag der Anmeldung: 01.11.2023
(73) Patentinhaber: Webasto SE, 82131 Stockdorf (DE)
(72) Erfinder: JAYARAJ, Rajesh, 82131 Stockdorf (DE); GYERKO, Levente, 82131 Stockdorf (DE); RAMALINGESH, Sunil, 82131 Stockdorf (DE)
(74) Vertreter: Prüfer & Partner mbB Patentanwälte · Rechtsanwälte
(86) Internationale Anmeldenummer: PCT/EP2022/050705
(87) Internationale Veröffentlichungsnummer: WO 2022/161788

(56) Entgegenhaltungen:
- JP-A- 2002 044 886
- JP-A- 2011 244 672
- US-A1- 2002 113 518
- US-A1- 2018 351 417

## Beschreibung

Die Erfindung betrifft ein Verfahren zum Herstellen eines Stators für einen bürstenlosen Gleichstrommotor gemäß Anspruch 1, Vorrichtung zum Herstellen eines Stators für einen bürstenlosen Gleichstrommotor gemäß Anspruch 11 sowie einen Stator gemäß Anspruch 12 und einem bürstenlosen Gleichstrommotor gemäß Anspruch 15.

Bürstenlose Gleichstrommotoren finden zunehmend Anwendung im Kraftfahrzeugbereich. Beispielsweise werden bürstenlose Gleichstrommotoren in Kraftfahrzeugen als Antriebe für elektrische Schiebedächern, elektrische Fensterheber und/oder elektrische Jalousien verwendet.

Bei bürstenlosen Gleichstrommotoren mit innenliegenden Permanentmagneten (Engl.: *internal permanent magnets*) und einteiligem Stator, beispielsweise bestehend aus einem einteiligen Vollblechschnittstator (Engl.: *stator lamination*), wird das Design des Stators mitunter von der Nutschlitzbreite zwischen den einzelnen in Richtung des innenliegenden Rotors hervorstehenden Polen des Stators aus Vollblechschnitten und dem Innendurchmesser des Stators definiert. Insbesondere werden durch das Design des Stators die Motorcharakteristika, wie beispielsweise das erreichbare Drehmoment, beeinflusst.

Dadurch, dass die Motoren immer kleinere Außenabmessungen, beispielsweise aufgrund von Packaging-Erfordernissen im Kraftfahrzeugbereich, aufweisen müssen, kann der Innendurchmesser des Stators nicht beliebig vergrößert werden. Darüber hinaus kann die Nutschlitzbreite nicht verbreitert werden, da dies zu unvorteilhaften Eigenschaften des Motors führen würde, wie beispielsweise störende Rastmomente (Engl.: *cogging*) und/oder störende Geräuschbildungen im Betrieb.

Durch das Erfordernis von möglichst kleinen Innendurchmessern und schmalen Nutzschlitzbreite wird allerdings das Wickeln der einzelnen Statorwicklungen bzw. das Bewickeln der Statorpole in der Produktion wesentlich erschwert, da die Nutschlitze für eine Wickelvorrichtung mit einem Wickelkopf nur schwer zugänglich sind.

Herkömmlicherweise fällt dadurch der elektrische Füllfaktor, der ein Maß für das Verhältnis zwischen dem Volumen eines Wickelpakets und dem für das Unterbringen des Wickelpakets benötigten Volumen ist in der Praxis tendenziell klein aus. Beispielsweise kann der elektrische Füllfaktor mitunter lediglich bei einem Wert von 27% liegen.

Ein niedriger Füllfaktor führt allerdings dazu, dass beispielsweise Permanentmagnete mit einem starken Magnetfeld, wie Seltene-Erden-Magnete, im Rotor verwendet werden müssen, um trotz des niedrigen Füllfaktors dennoch ein hohes erreichbares Drehmoment im Betrieb des Motors zu erreichen.

Die Verwendung von Permanentmagneten mit einem starken Magnetfeld im Rotor führt allerdings dazu, dass die Produktionskosten des bürstenlosen Gleichstrommotors steigen. Darüber hinaus erhöht/erhöhen sich durch die erschwerte Zugänglichkeit der Statornutschlitze die Produktionszeit und/oder der Produktionsaufwand.

In der internationalen Anmeldung WO 2016 101 983 A1 wird ein segmentierter Stator beschrieben, der eine Vielzahl von aus Vollblechschnitten aufgebauten Statorsegmenten aufweist, wobei jedes Statorsegment einen einzelnen Statorzahn (Engl. *stator tooth*) bzw. Statorpol umfasst. Dabei werden die einzelnen Statorsegmente zuerst zusammengefügt, insbesondere durch Schweißverbindungen, und anschließend werden die Wicklungen an den Statorpolen des aus den Statorsegmenten zusammengefügten Stators appliziert. Die Druckschrift US 2018/351417 A1 offenbart einen Stator für einen elektrischen Motor mit einem Kern, der sich aus einem inneren Kern und einem äußeren Kern zusammensetzt. Der Kern ist jeweils mehrteilig, z.B. vierteilig aufgebaut. Der äußere Kern besitzt eine Ringform und umschließt den inneren Kern im zusammengebauten Zustand. Der innere Kern weist Statorzähne und diese im Bereich der Nutschlitze verbindende Verbindungsabschnitte auf. Der innere Kern ist aus gestapelten Platten magnetischen Stahls aufgebaut. Wicklungen werden an den Statorzähnen über deren jeweils dem äußeren Kern zugewandten, vor der Montage noch freien proximalen Ende angebracht. Danach werden der äußere ringförmige Kern und der innere Kern zusammengefügt, indem die Statorzähne in Aussparungen des äußeren Kerns eingesetzt werden.

Document JP2011244672 relates to a similar stator.

Der Erfindung liegt die Aufgabe zugrunde, ein möglichst schnelles und kostengünstiges Verfahren zum Herstellen eines Stators für einen bürstenlosen Gleichstrommotor sowie eine entsprechende Vorrichtung bereitzustellen, mit dem/der insbesondere ein hoher elektrischer Füllfaktor für die Statorwicklungen des herzustellenden Stators erreicht werden kann. Des Weiteren ist es insbesondere Aufgabe der Erfindung einen entsprechenden Stator und einen entsprechenden bürstenlosen Gleichstrommotor bereitzustellen.

Die Aufgabe der Erfindung wird gelöst durch ein Verfahren zum Herstellen eines Stators für einen bürstenlosen Gleichstrommotor gemäß Anspruch 1, Vorrichtung zum Herstellen eines Stators für einen bürstenlosen Gleichstrommotor gemäß Anspruch 11 sowie einen Stator gemäß Anspruch 12 und einem bürstenlosen Gleichstrommotor gemäß Anspruch 15.

Insbesondere wird die Aufgabe der Erfindung gelöst durch ein Verfahren zum Herstellen eines Stators für einen bürstenlosen Gleichstrommotor, wobei der Stator eine Vielzahl von Statorsegmenten, insbesondere mindestens drei Statorsegmente aufweist, die jeweils mindestens einen ersten Wicklungsträgervorsprung und mindestens einen weiteren Wicklungsträgervorsprung umfassen, die über einen Grundrahmenelement verbunden sind, wobei die Wicklungsträgervorsprünge derart ausgebildet sind, dass sie von dem Grundrahmenelement hervorstehen und an distalen Enden der Wicklungsträgervorsprünge Polschuhe anbringbar sind, wobei das Verfahren folgende Schritte umfasst:
a) Bereitstellen der Statorsegmente in einer ersten, insbesondere sternförmigen, Anordnung, wobei die Wicklungsträgervorsprünge der Statorsegmente außenliegend und die Grundrahmenelemente der Statorsegmente innenliegend relativ zu der ersten Anordnung angeordnet sind;
b) Bewickeln der ersten Wicklungsträgervorsprünge der Statorsegmente mit einer Wickelkopfvorrichtung;
c) Rotieren der Wickelkopfvorrichtung um eine Teilung der Wicklungsträgervorsprünge der Statorsegmente;
d) Bewickeln der weiteren Wicklungsträgervorsprünge der Statorsegmente mit der Wickelkopfvorrichtung;
e) Anbringen der Polschuhe an den distalen Enden der einzelnen außenliegend angeordneten Wicklungsträgervorsprünge; und
f) Zusammensetzen der Statorsegmente in einer zweiten, insbesondere ringförmigen, Anordnung, in der die Wicklungsträgervorsprünge der Statorsegmente innenliegend und die Grundrahmenelemente der Statorsegmente außenliegend relativ zu der zweiten Anordnung angeordnet sind.

Ein Gedanke der Erfindung beruht darauf, dass der Stator, der beispielweise aus Vollblechausschnitten aufgebaut ist, in einzelne Statorsegmente aufgeteilt ist, so dass eine verbesserte Zugänglichkeit der Statosegmente beim Bewickeln der Wicklungsträgervorsprünge (der Pole) erreicht werden kann. Insbesondere weist jedes Statorsegment mindestens zwei Wicklungsträgervorsprünge (mindestens zwei Pole) auf.

Ein weiterer Gedanke der Erfindung beruht darauf, dass die ersten Wicklungsträgervorsprünge der Statorsegmente und die weiteren Wicklungsträgervorsprünge (zweiten Wicklungsträgervorsprünge) der Statorsegmente in einer ersten Anordnung bewickelt werden, die sich von einer zweiten Anordnung unterscheidet, in der die Statorsegmente schließlich, insbesondere nach dem Bewickeln der Wicklungsträgervorsprünge und dem Anbringen der Polschuhe zu einem Stator zusammengesetzt werden.

Bei der ersten Anordnung sind die Statorsegmente derart positioniert und/oder ausgerichtet, dass die einzelnen Wicklungsträgervorsprünge (und die zwischen den Wicklungsträgervorsprüngen liegenden Nutschlitze) außen liegen und damit von außen für eine Wickelvorrichtung zugänglich sind.

Bei der zweiten Anordnung sind die Statorsegmente hingegen derart positioniert und/oder ausgerichtet, dass die einzelnen Wicklungsträgervorsprünge (und die zwischen den Wicklungsträgervorsprüngen liegenden Nutschlitze) innen liegen und sich radial nach innen hin zu einer Mittelachse der zweiten Anordnung erstrecken.

In der ersten Anordnung ist eine verbesserte Zugänglichkeit der Wicklungsträgervorsprünge mit einer Wickelvorrichtung möglich, so dass einerseits der erreichbare elektrische Füllfaktor verbessert werden kann. Andererseits können die Wicklungsträgervorsprünge durch die verbesserte Zugänglichkeit mit mehreren Wicklungsköpfen einer Wickelvorrichtung gleichzeitig bewickelt werden, so dass der Zeitaufwand zum Herstellen, insbesondere zum Bewickeln der einzelnen Wicklungsträgervorsprünge reduziert werden kann.

Unter dem (elektrischen) Füllfaktor kann ein Maß für das Verhältnis zwischen dem Volumen eines Wicklungspakets, beispielsweiseaus Kupferwicklungen bestehend, und dem benötigten Volumen, um das Wicklungspakets unterzubringen, verstanden werden. Der elektrische Füllfaktor kann somit als das Verhältnis des Nichteisenanteils des Stators einschließlich der Statornutschlitz zu der Summe der nichtisolierten Wicklungsquerschnitte (Kupferquerschnitte) verstanden werden.

Unter einer Teilung, oder auch Polteilung, wird vorliegend der Abstand zwischen zwei benachbarten Wicklungsträgervorsprüngen verstanden, wobei die Teilung auch als ein Winkel angegeben werden kann. Im Konkreten kann die Teilung dabei von Wicklungsträgervorsprungmitte zu Wicklungsträgervorsprungmitte (bzw. von Polmitte zu Polmitte) gemessen werden. In der zweiten (ringförmigen) Anordnung bilden die Grundrahmenelemente insbesondere einen (rinförmigen) Grundrahmen, wobei die Wicklungsträgervorsprünge der Statorsegmente am inneren Umfang des Grundrahmens nach innen hervorstehen.

Die Statorsegmente können beispielsweise zumindest teilweise aus Vollblechausschnitten, Kernblech oder Elektroblech hergestellt sein. Unter einer ersten Anordnung und einer zweiten Anordnung wird keine physische Vorrichtung verstanden, sondern eine Positionierung und/oder Ausrichtung der einzelnen Statorsegmente zueinander. Begriffe wie außenliegend und/oder innenliegend bezeichnet dabei, wie ein entsprechendes Element relativ zu der Gesamtanordnung positioniert und/oder ausgerichtet ist.

In einer Ausführungsform wird/werden in Schritt b) das Bewickeln der ersten Wicklungsträgervorsprünge der Statorsegmente zumindest im Wesentlichen gleichzeitig und/oder in Schritt d) das Bewickeln der weiteren Wicklungsträgervorsprünge der Statorsegmente zumindest im Wesentlichen gleichzeitig durchgeführt.

Hierdurch kann eine Zeitersparnis für den Herstellungsvorgang des Stators erreicht werden, da das Bewickeln der ersten Wicklungsträgervorsprünge und der weiteren Wicklungsträgervorsprünge parallel vorgenommen werden.

Vorzugsweise findet in Schritt e) das Anbringen der Polschuhe an den distalen Enden der einzelnen Wicklungsträgervorsprünge zumindest im Wesentlichen gleichzeitig statt, wodurch eine weitere Reduzierung der benötigten Herstellungszeit des Stators erreicht werden kann, da alle Polschuhe parallel anbringbar sind.

Insbesondere umfasst das Verfahren ferner einen der folgenden Schritte:
- Vorerwärmen eines Jochrings und Montieren des Jochrings um die zusammengesetzten herum; oder
- Gießen eines Jochrings um die zusammengesetzten Statorsegmente herum, wobei sich die Statorsegmente in der zweiten Anordnung befinden.

Durch den montierten oder gegossenen Jochring der um die Statorsegmente, die in der zweiten Anordnung zusammengesetzt sind, herum angeordnet ist, kann der Stator fertiggestellt werden und die zusammengesetzten Statorsegmente in der zweiten Anordnung fest fixiert werden.

In einer Ausführungsform weist der Stator drei Statorsegmente mit jeweils zwei Wicklungsträgervorsprüngen auf, wobei in Schritt f) die Wicklungsträgervorsprünge in der zweiten Anordnung auf einer Ringfläche angeordnet sind, wobei die Wicklungsträgervorsprünge, insbesondere zumindest im Wesentlichen in einem Winkel von 60°, voneinander beabstandet von den Grundrahmenelementen in Richtung einer Mittelachse der zweiten Anordnung hervorstehen. Hierdurch sind die Statorsegmente nach Schritt f) direkt derart positioniert und ausgerichtet, dass die einzelnen Statorsegmente zu einem Stator zusammengesetzt sind.

Vorzugsweise sind in den Schritten a) bis e) die Statorsegmente des Stators in der ersten Anordnung auf einem Außenumfang einer Sternfläche angeordnet, wodurch eine Zugänglichkeit für die Wicklungsköpfe der Wickelvorrichtung erreicht wird.

Insbesondere wird in Schritt c) ein Rotieren einzelner Wickelköpfe um einen Winkel, insbesondere von zumindest im Wesentlichen 60°, durchgeführt, wodurch möglichst einfach die weiteren Wicklungsträgervorsprünge der Statorsegmente für den die Wickelköpfe der Wickelvorrichtung zugänglich sind.

Vorzugsweise werden in Schritt f) mindestens zwei der drei Statorsegmente um einen Winkel von zumindest im Wesentlichen 240° rotiert, wobei insbesondere eines der mindestens zwei rotierten Statorsegmente in entgegengesetzt zum anderen Statorsegment der mindestens zwei rotierten Statorsegmente rotiert werden. Hierdurch kann ein Übergang von der ersten Anordnung in die zweite Anordnung besonders schnell und effizient stattfinden.

In einer die Wicklungsträgervorsprünge in den Schritten b) und d) nach einem Flyerwickel-Verfahren bewickelt werden, wodurch die einzelnen Wicklungsträgervorsprünge der Statorsegmente besonders schnell bewickelt werden können.

Unter einem Flyerwickel-Verfahren kann ein Bewicklungsverfahren verstanden werden, das eine Wicklung erzeugt, indem ein Draht über eine Rolle oder durch eine Düse, die sich an einer drehenden Scheibe, dem sogenannten Flyer, befindet, zugeführt wird. Die drehende Scheibe rotiert in einem bestimmten Abstand zur zu wickelnden Spule. Der Draht wird dabei (kontinuierlich) durch eine Welle der rotierenden Scheibe zugeführt.

Es wird bevorzugt, dass das Verfahren ferner folgenden Schritt umfasst:
- Verbinden von freiliegenden Wicklungsenden der Statorsegmente untereinander mit einer Vielzahl von Anschlusselementen, vorzugsweise mit mindestens sechs Anschlusselementen, die insbesondere als Schneid- und/oder Klemm-Anschlusselemente ausgestaltet sind,
wodurch eine besonders schnelle Verbindung der freiliegenden Wicklungsenden der Statorsegmente erreicht wird.

Ferner wird die Aufgabe gelöst durch eine Vorrichtung zum Herstellen eines Stators für einen bürstenlosen Gleichstrommotor, wobei der Stator eine Vielzahl von Statorsegmenten, insbesondere mindestens drei Statorsegmente aufweist, die jeweils mindestens einen ersten Wicklungsträgervorsprung und mindestens einen weiteren Wicklungsträgervorsprung umfassen, die Wicklungsträgervorsprünge der Statorsegmente über ein Grundrahmenelement verbunden sind, wobei die Wicklungsträgervorsprünge derart ausgebildet sind, dass sie von dem Grundrahmenelement hervorstehen und an distalen Enden der Wicklungsträgervorsprünge Polschuhe anbringbar sind, wobei die Vorrichtung eine Wickelvorrichtung mit einer Vielzahl von Wickelköpfen aufweist und dazu ausgestaltet ist, das obige Verfahren durchzuführen, wobei insbesondere die Anzahl der Wickelköpfe der Wickelvorrichtung gleich der Anzahl der Statorsegmente ist.

Die erfindungsgemäße Vorrichtung zum Herstellen eines Stators für einen bürstenlosen Gleichstrommotors weist die Vorteile auf, die bereits in Bezug auf das Verfahren zum Herstellen eines Stators für einen bürstenlosen Gleichstrommotors beschrieben wurden.

Die in dem Zusammenhang mit dem obigen Herstellungsverfahren beschriebenen Merkmale und damit verbundenen Vorteile sind auch mit der erfindungsgemäßen Vorrichtung kombinierbar und können insbesondere als entsprechende Konfiguration der Vorrichtung umgesetzt sein.

Des Weiteren ist Aufgabe gelöst durch einen Stator für einen bürstenlosen Gleichstrommotor, der eine Vielzahl von Statorsegmenten, insbesondere mindestens drei Statorsegmente aufweist, die jeweils mindestens einen ersten Wicklungsträgervorsprung und mindestens einen weiteren Wicklungsträgervorsprung umfassen, wobei die Wicklungsträgervorsprünge eines Statorsegments über ein Grundrahmenelement verbunden sind, wobei die Wicklungsträgervorsprünge derart ausgebildet sind, dass sie von dem Grundrahmenelement hervorstehen und an distalen Enden der Wicklungsträgervorsprünge Polschuhe anbringbar sind. Vorzugsweise ist der Stator durch ein Verfahren der obigen Art und/oder in einer Vorrichtung der obigen Art hergestellt.

Insbesondere weist der Stator drei Statorsegmente mit jeweils zwei Wicklungsträgervorsprüngen auf, da dies eine einfache Anordnung der Statorsegmente ermöglicht.

Vorzugsweise beträgt ein Füllfaktor der Wicklungsträgervorsprünge des Stators mehr als 40%, insbesondere mehr als 45%, vorzugsweise mehr als 50% und/oder der Innendurchmesser des Stators einen Wert, der kleiner als 38mm, kleiner insbesondere 36mm, vorzugsweise zumindest im Wesentlichen 34mm, ist.

Ferner wird die Aufgabe gelöst durch einen bürstenlosen Gleichstrommotor zur Verwendung in Kraftfahrzeugen, insbesondere zur Verwendung als Schiebedach- und/oder Fensterheber- und/oder Jalousiemotor, mit dem obigen Stator, der durch das Verfahren der obigen Art und/oder in einer Vorrichtung der obigen Art hergestellt ist.

Das erfindungsgemäße bürstenlosen Gleichstrommotor weist die Vorteile auf, die bereits in Bezug auf den Stator beschrieben wurden.

Die in dem Zusammenhang mit dem obigen Stator beschriebenen Merkmale und damit verbundenen Vorteile sind auch mit dem erfindungsgemäßen bürstenlosen Gleichstrommotor kombinierbar und können insbesondere als entsprechende Konfiguration des Gleichstrommotors umgesetzt sein.

Weitere Ausführungsformen ergeben sich aus den Unteransprüchen.

Nachfolgend wird die Erfindung anhand von nicht einschränkenden Ausführungsbeispielen unter Bezug auf die beigefügten Zeichnungen weiter erläutert. Hierbei zeigen:
- Fig. 1: eine Draufsicht von mehreren Statorsegmenten nach Schritt a) gemäß einem Ausführungsbeispiel des erfindungsgemäßen Verfahrens;
- Fig. 2: eine Draufsicht von mehreren Statorsegmenten nach Schritt b) gemäß dem Ausführungsbeispiel;
- Fig. 3: eine Draufsicht von mehreren Statorsegmenten nach Schritt c) gemäß dem Ausführungsbeispiel;
- Fig. 4: eine Draufsicht von mehreren Statorsegmenten nach Schritt d) gemäß dem Ausführungsbeispiel;
- Fig. 5: eine Draufsicht von mehreren Statorsegmenten nach Schritt e) gemäß dem Ausführungsbeispiel;
- Fig. 6: eine Draufsicht von mehreren Statorsegmenten in Schritt f) gemäß dem Ausführungsbeispiel;
- Fig. 7: eine Draufsicht von mehreren Statorsegmenten nach Schritt f) gemäß dem Ausführungsbeispiel;
- Fig. 8: eine dreidimensionale Ansicht von drei nicht zusammengesetzten Statorsegmenten mit angebrachten Polschuhen;
- Fig. 9: eine dreidimensionale Ansicht von drei Statorsegmenten in der ersten Anordnung;
- Fig. 10: eine dreidimensionale Ansicht nach dem Bewickeln der ersten Wicklungsträgervorsprünge der Statorsegmente;
- Fig. 11: eine dreidimensionale Ansicht nach dem Bewickeln der zweiten Wicklungsträgervorsprünge der Statorsegmente;
- Fig. 12: eine dreidimensionale Ansicht nach dem Bewickeln der zweiten Wicklungsträgervorsprünge der Statorsegmente mit einem Polschuh;
- Fig. 13: eine dreidimensionale Ansicht nach dem Anbringen der Polschuhe an den distalen Enden der Wicklungsträgervorsprünge der Statorsegmente;
- Fig. 14: eine dreidimensionale Ansicht in einem Zwischenschritt zwischen der ersten Anordnung und der zweiten Anordnung;
- Fig. 15: eine dreidimensionale Ansicht von drei Statorsegmenten, die zu einem Stator in der zweiten Anordnung zusammengesetzt sind;
- Fig. 16a: eine schematische Darstellung der Kontaktierung/Verbindung der Wicklungen, mit denen die Wicklungsträgervorsprünge bewickelt sind;
- Fig. 16b: eine schematische Darstellung der Kontaktierung/Verbindung der Wicklungen, mit denen die Wicklungsträgervorsprünge bewickelt sind;
- Fig. 17a: eine Detailansicht eines unteren Endes eines Statorsegments mit der Drahtführung und dem am unteren Ende des Grundrahmenelements des Statorsegments zwischen den Wicklungsträgervorsprüngen angeordnete Anschlusselements; sowie
- Fig. 17b: eine Detailansicht eines oberen Endes eines Statorsegments mit der Drahtführung und dem am oberen Ende des Grundrahmenelements des Statorsegments an den Enden (Endbereichen) des Statorsegments angeordneten zwei Anschlusselementen.

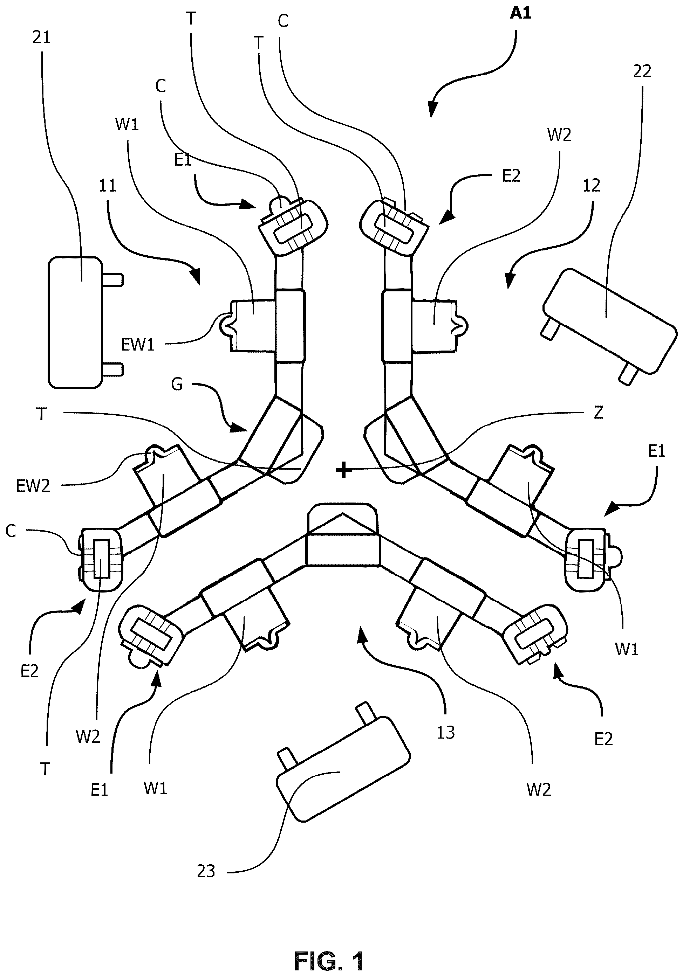

In Fig. 1 ist eine Draufsicht eines Ausführungsbeispiels gezeigt, bei der drei Statorsegmente 11, 12, 13 eines Stators 1 in Schritt a) des Herstellungsverfahrens abgebildet sind. Die Statorsegmente 11, 12, 13 sind beispielsweise zumindest teilweise aus Vollblechausschnitten, Kernblech oder Elektroblech hergestellt.

In diesem Ausführungsbeispiel werden die drei Statorsegmente 11, 12, 13 in Schritt a) in einer ersten Anordnung A1 angeordnet, wobei die Statorsegmente 11, 12, 13 insbesondere sternförmig angeordnet sind. Die Wicklungsträgervorsprünge W1, W2 der Statorsegmente 11, 12, 13 sind in Bezug auf die erste Anordnung A1 außenliegend angeordnet.

In Fig. 1 sind die Statorsegmente 11, 12, 13 sind rotationssymmetrisch um eine (gedachte) Zentralachse Z der ersten Anordnung A1 herum angeordnet, wobei ein Winkel zwischen den Statorsegmente 11, 12, 13 zumindest im Wesentlichen 120° beträgt.

Jedes Statorsegment 11, 12, 13 weist ein Grundrahmenelement V, einen ersten Wicklungsträgervorsprung W1 und einen weiteren Wicklungsträgervorsprung W2 auf, wobei die Wicklungsträgervorsprung W1, W2 durch den Grundrahmenelement G verbunden sind.

Ferner weist jedes Statorsegment 11, 12, 13 an einen ersten Endbereich E1 und an einen zweiten Endbereich E2 Verbindungselemente C1, C2 auf, mit denen die Statorsegmente 11, 12, 13 untereinander verbindbar sind, beispielsweise durch (komplementäre) Steck- und/oder Rastelemente.

Darüber hinaus sind an den Endbereichen E1, E2 und zwischen den Wicklungsträgervorsprüngen W1, W2 Anschlusselemente T vorgesehen. Die Anschlusselemente T sind beispielsweise als Schneid- und/oder Klemm-Anschlusselemente ausgebildet.

In dem vorliegenden Ausführungsbeispiel sind die Anschlusselemente T an den Endbereichen E1, E2 an einem oberen Bereich der Grundrahmenelemente G der Statorsegmente 11, 12, 13, wobei die die Anschlusselemente T zwischen den Wicklungsträgervorsprüngen W1, W2 an einem unteren Bereich der Grundrahmenelemente G der Statorsegmente 11, 12, 13 angeordnet..

In Fig. 1 sind des Weiteren drei Wickelköpfe 21, 22, 23 einer Wickelvorrichtung 2 abgebildet, die sich in einer Position und/oder Ausrichtung befinden, in der ein Bewickeln der ersten Wicklungsträgervorsprünge W1 der Statorsegmente 11, 12, 13 möglich ist.

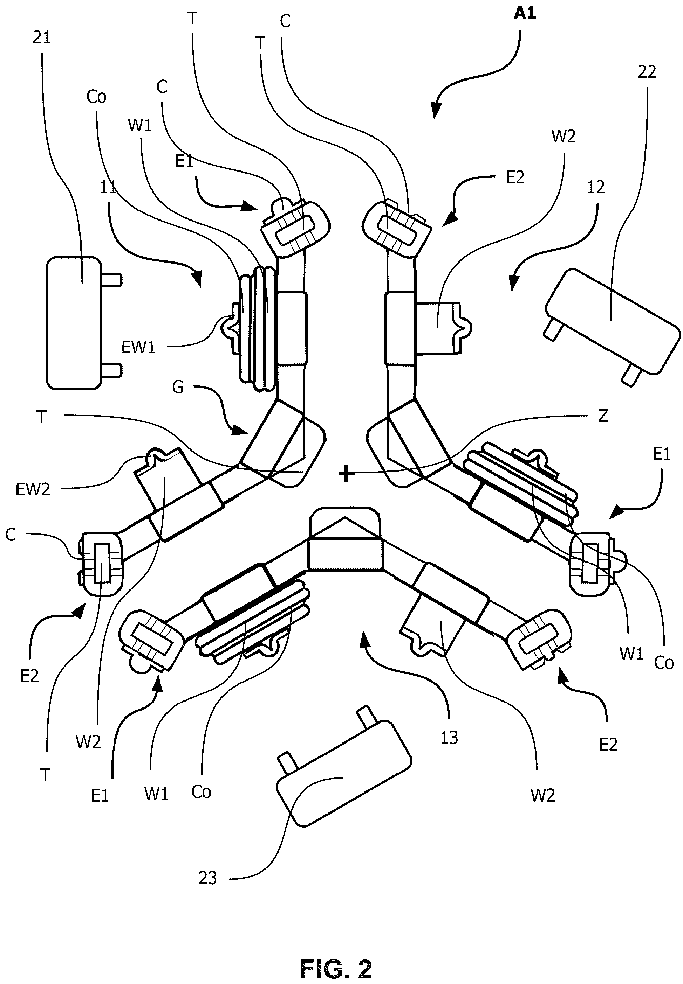

Fig. 2 zeigt eine Draufsicht des Ausführungsbeispiels aus Fig. 1, bei dem die Statorsegmente 11, 12, 13 weiterhin in der ersten Anordnung A1 angeordnet sind.

In Fig. 2 wurde der Schritt b) des Herstellungsverfahrens ausgeführt. Nun sind die Wicklungsträgervorsprünge W1 der Statorsegmente 11, 12, 13 durch die drei Wickelköpfen 21, 22, 23 bereits mit einer Wicklung Co bewickelt.

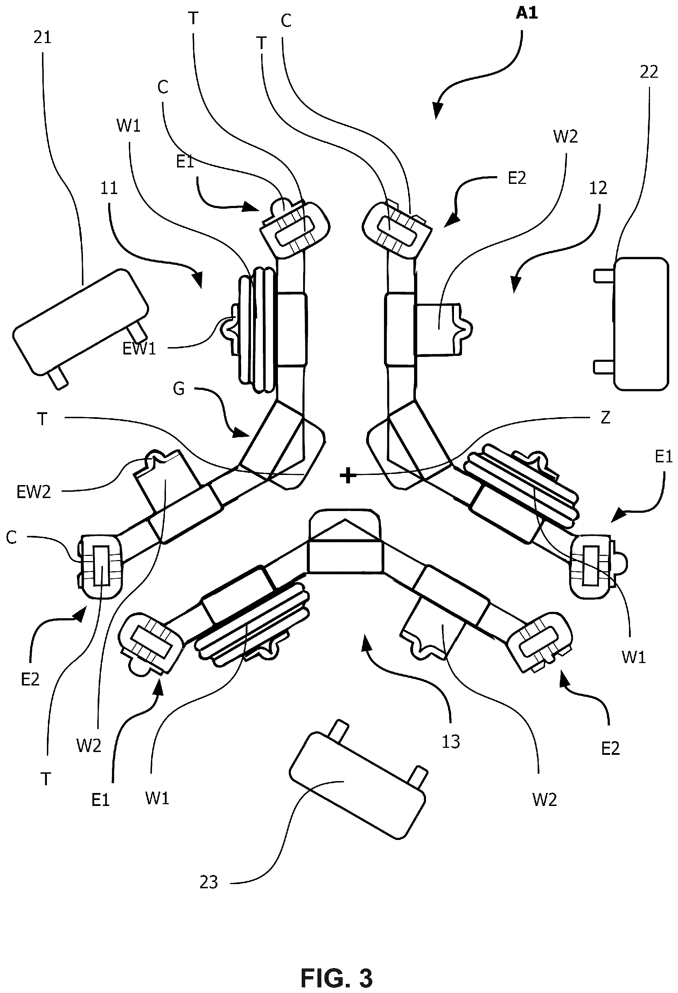

Weiterhin ist in Fig. 3 eine Draufsicht des Ausführungsbeispiels aus Fig. 1 oder 2 gezeigt, bei dem die Statorsegmente 11, 12, 13 in der ersten Anordnung A1 angeordnet sind. Fig. 3 zeigt hierbei die Statorsegmente 11, 12, 13 und die Wickelköpfe 21, 22, 23 nachdem der Schritt c) des Herstellungsverfahrens ausgeführt wurde.

In dem Ausführungsbeispiel aus den Figuren 1 bis 3 sind in Schritt c) des Herstellungsverfahrens die Wickelköpfe 21, 22, 23 jeweils um zumindest im Wesentlichen 60° im Uhrzeigersinn um eine jeweilige Rotationsachse rotiert. Die Rotationsachsen erstrecken sich parallel zu der (gedachten) Zentralachse Z.

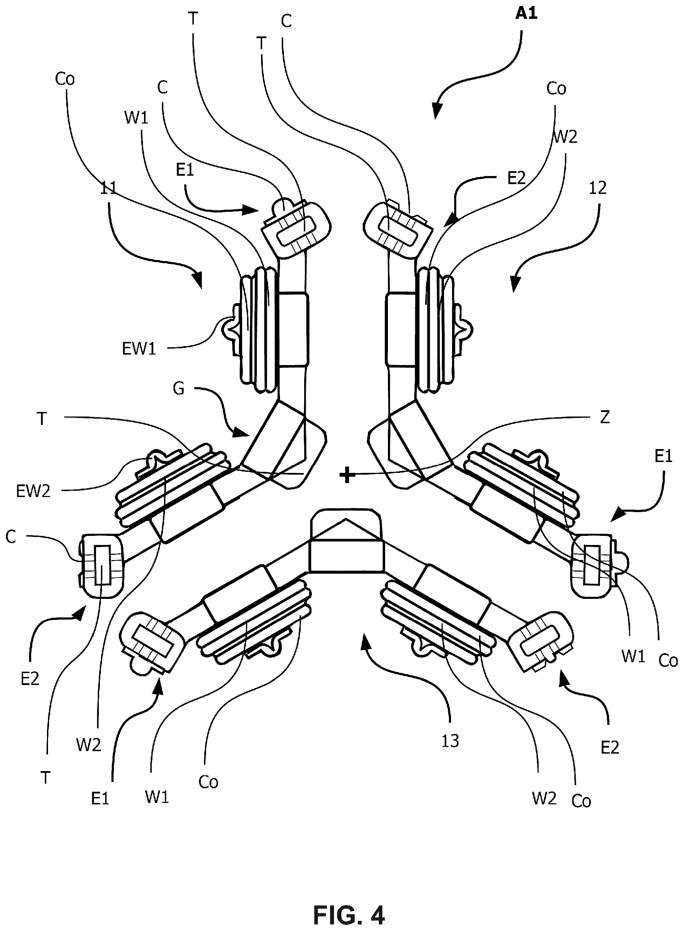

In Fig. 4 ist eine Draufsicht des Ausführungsbeispiels aus den Figuren 1 bis 3 gezeigt, bei dem die Statorsegmente 11, 12, 13 in der ersten Anordnung A1 angeordnet sind.

Fig. 4 zeigt die Statorsegmente 11, 12, 13 in der ersten Anordnung A1 nachdem Schritt d) ausgeführt. Es sind nun die ersten und zweiten Wicklungsträgervorsprünge W1, W2 der Statorsegmente 11, 12, 13 durch die drei Wickelköpfen 21, 22, 23 mit einer Wicklung Co bewickelt.

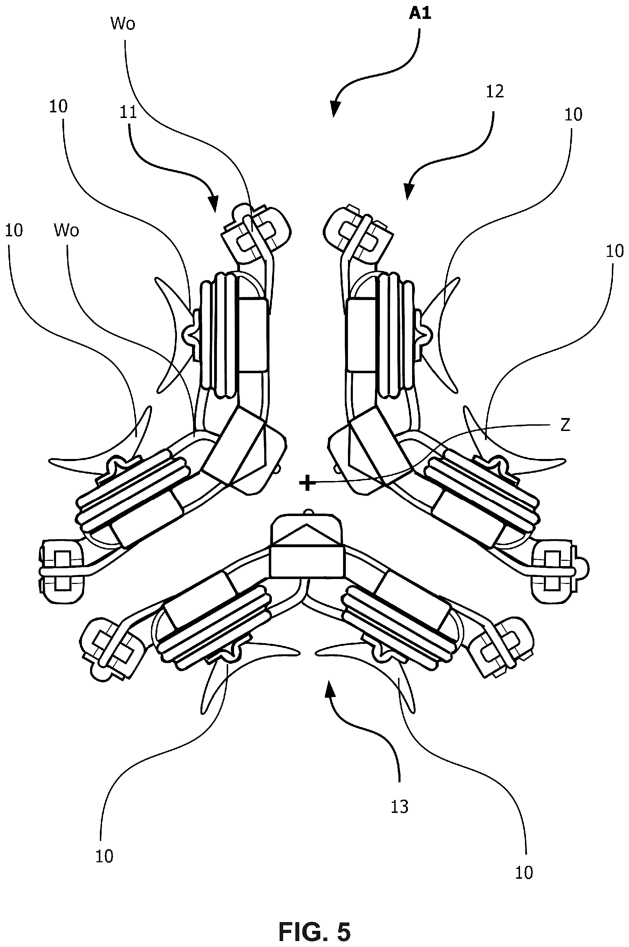

In der Draufsicht des Ausführungsbeispiels aus den Figuren 1 bis 4, die in Fig. 5 dargestellt ist, sind die Polschuhe 10 an distalen Enden EW1, EW2 der Wicklungsträgervorsprünge W1, W2 (nach Schritt e) des Herstellungsverfahrens) angeordnet.

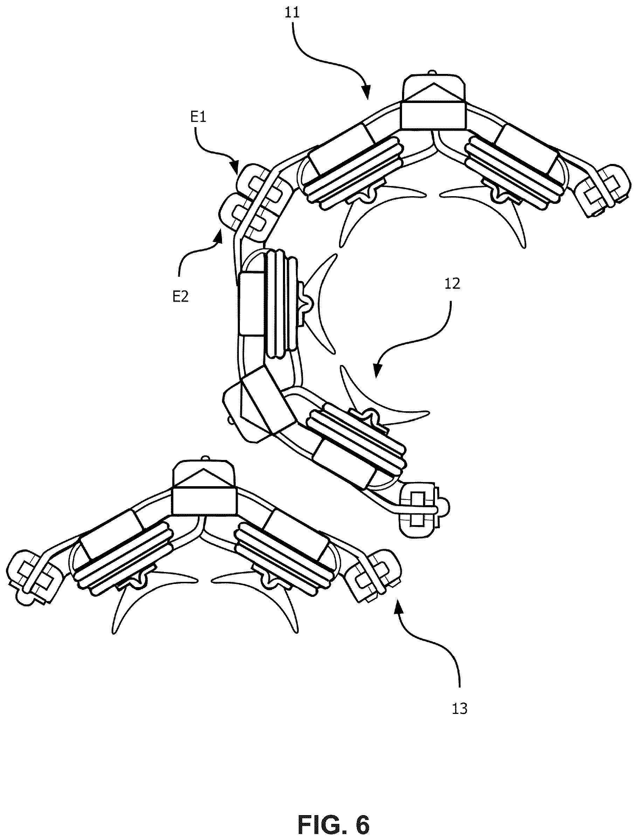

Fig. 6 zeigt eine Draufsicht des Ausführungsbeispiels aus den Figuren 1 bis 5, wobei die Statorsegmente 11, 12, 13 nicht mehr in der ersten Anordnung A1 vorliegen.

Fig. 6 zeigt hierbei einen Zwischenschritt des Schritts f), bei dem das Statorsegment 11 in Uhrzeigersinn um zumindest im Wesentlichen 240° rotiert wurde, wobei die Drehachse parallel zur gedachten Zentrumsachse Z verläuft. Der Endbereich E1 des Statorsegments 11 ist mit dem Endbereich E2 des Statorsegments 12 durch die dort angebrachten Verbindungselemente C miteinander mechanisch verbunden.

Die Enden der Wicklungen Co des Wicklungsträgervorsprungs W1 des Statorsegments 11 sind mit den Enden der Wicklung Co des Wicklungsträgervorsprungs W2 des Statorsegments 12 über die jeweiligen Anschlusselemente T (Schneid- und/oder Klemm-Anschlusselemente T) im Endbereich E1 des Statorsegments 11 und im Endbereich E2 des Statorsegments 12 (die durch die Verbindungselemente C mechanisch verbunden sind) elektrisch verbunden.

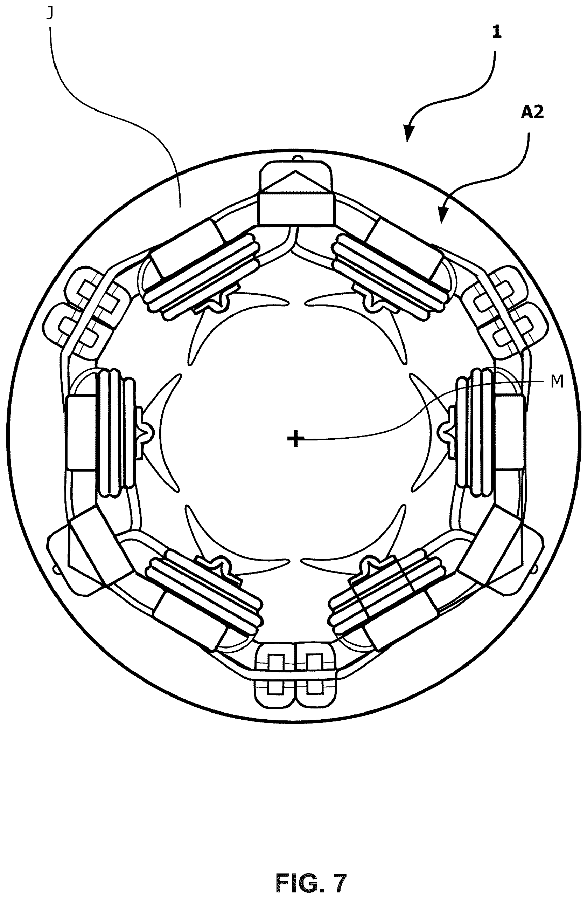

In Fig. 7 wird eine Draufsicht des Ausführungsbeispiels aus den Figuren 1 bis 6 gezeigt, wobei die Statorsegmente 11, 12, 13 nun in der zweiten Anordnung A2 mit einer (gedachten) Mittelachse M vorliegen.

Das Statorsegment 13 in Fig. 7 wurde entgegengesetzt zum Uhrzeigersinn um zumindest im Wesentlichen 240° rotiert, wobei die Drehachse parallel zur gedachten Zentrumsachse Z verläuft. Das Statorsegment 13 ist mit den Statorsegmenten 11 und 12 an beiden ihrer Endbereiche E1, E2 durch die dort angebrachten Verbindungselemente C miteinander mechanisch verbunden. Darüber hinaus ist in Fig. 7 der Stator 1 von einem Jochring J umgossen.

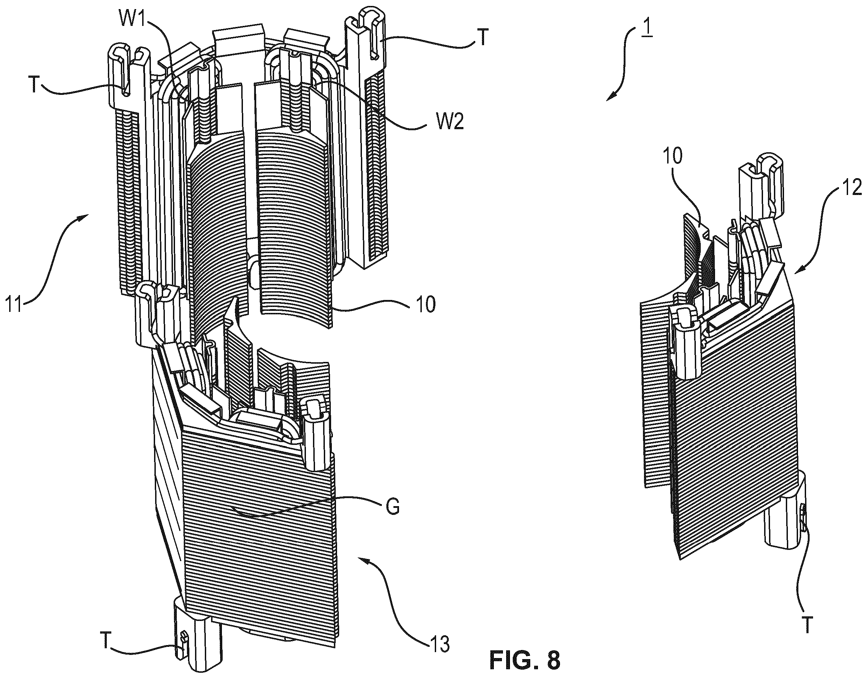

In Fig. 8 ist eine dreidimensionale Ansicht von drei Statorsegmenten 11, 12, 13 gezeigt. Jedes Statorsegment 11, 12, 13 weist ein Grundrahmenelement G auf, von dem jeweils zwei Wicklungsträgervorsprünge W1, W2 vorstehen. An den distalen Enden EW1, EW2 der Wicklungsträgervorsprünge W1, W2 sind Polschuhe 10 angebracht. Das Anbringen der Polschuhe 10 kann beispielsweise durch ein Aufschieben der Polschuhe 10 (von unten oder oben her) erfolgen, wobei die distalen Enden der Wicklungsträgervorsprünge W1, W2 eine komplementäre Struktur zu der Struktur der Polschuhe 10 aufweisen kann. Dies kann beispielsweise nach dem Feder-Nut-Prinzip realisiert sein.

Jedes Statorsegment 11, 12, 13 weist am oberen Bereich des Grundrahmenelements G jeweils an den Enden E1, E2 des Statorsegments ein Anschlusselement T auf. Des Weiteren weist jedes Statorsegment 11, 12, 13 am unteren Bereich des Grundrahmenelements G zwischen den Wicklungsträgervorsprüngen W1, W2 ein Anschlusselement T auf.

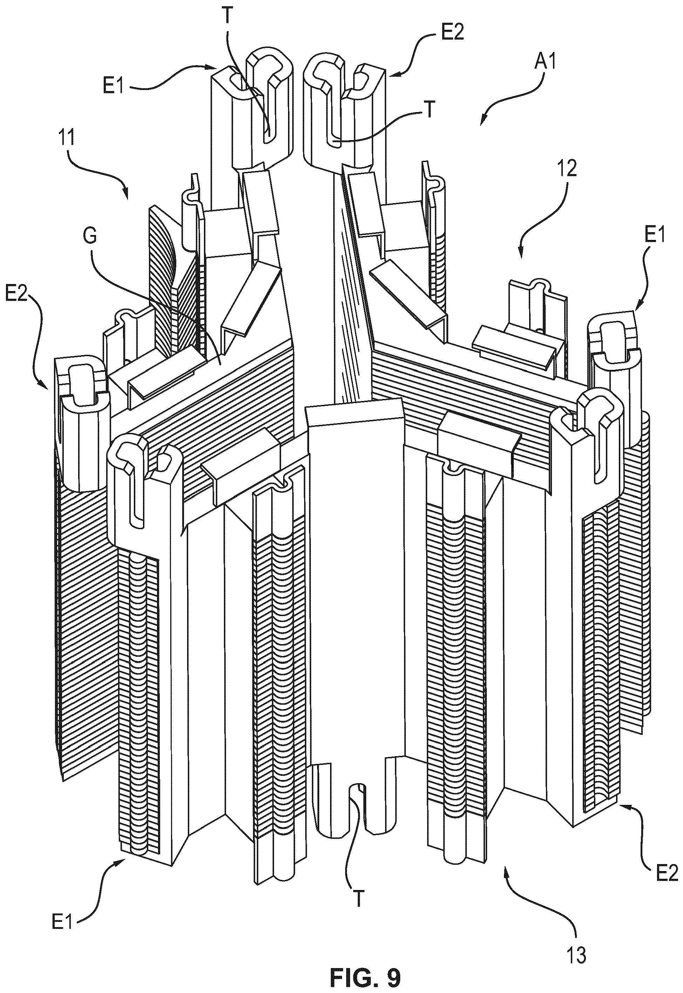

In Fig. 9 ist eine dreidimensionale Ansicht der drei Statorsegmente 11, 12, 13 abgebildet, wobei die Statorsegmente 11, 12, 13 in einer ersten (sternförmigen) Anordnung angeordnet sind. An den distalen Enden EW1, EW2 der Wicklungsträgervorsprünge W1, W2 sind keine Polschuhe 10 angebracht. Darüber hinaus sind die Wicklungsträgervorsprünge W1, W2 in Fig. 9 unbewickelt.

Die erste (sternförmige) Anordnung A1 der drei Statorsegmente 11, 12, 13 zeichnet sich dadurch aus, dass die Grundrahmenelemente G der Statorsegmente 11, 12, 13 einer zugewandt angeordnet sind und die Wicklungsträgervorsprünge W1, W2 nach außen hervorstehen. Die Endbereiche E1, E2 der Statorsegmente 11, 12, 13 bilden die Ecken der Sternform. Die Sternform weist drei Ecken auf, wenn die erste Anordnung A1 aus drei Statorsegmente 11, 12, 13 gebildet wird.

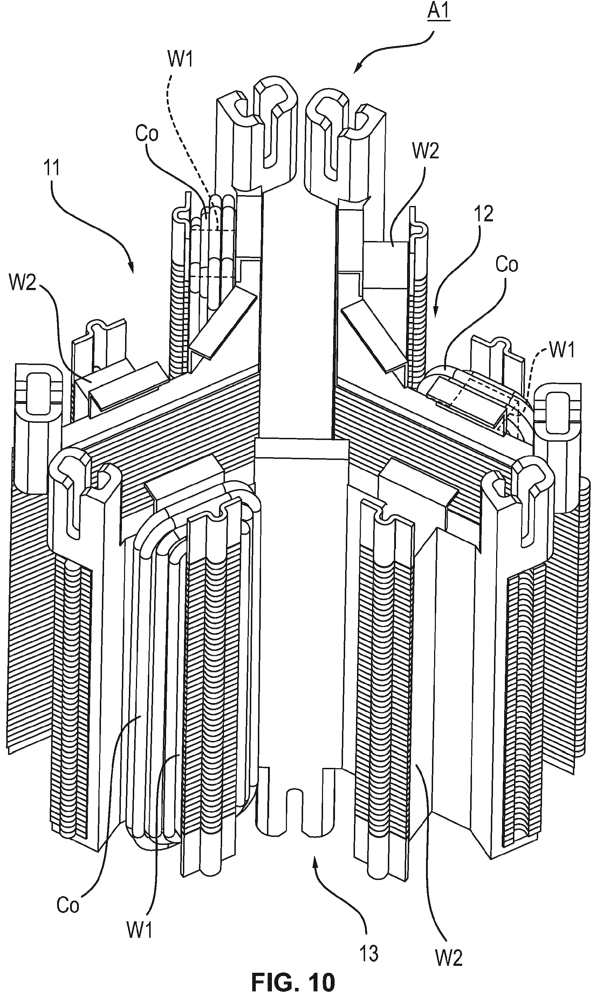

Fig. 10 zeigt eine dreidimensionale Ansicht der drei Statorsegmente 11, 12, 13 aus Fig. 9, wobei die ersten Wicklungsträgervorsprünge W1 bewickelt sind. Die zweiten Wicklungsträgervorsprünge W2 sind in diesem Zustand noch nicht bewickelt.

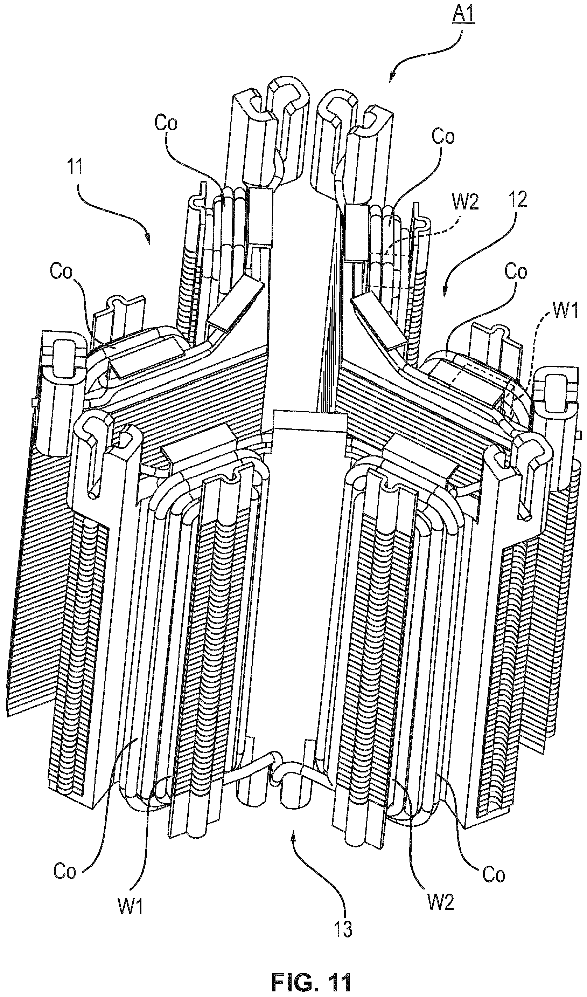

In Fig. 11 ist eine dreidimensionale Ansicht der drei Statorsegmente 11, 12, 13 aus den Figuren 9 und 10 gezeigt. Die Statorsegmente 11, 12, 13 sind weiterhin in der ersten Anordnung A1 angeordnet, allerdings sind nun auch die zweiten Wicklungsträgervorsprünge W2 bewickelt.

Darüber hinaus sind die Enden der Wicklungsdrähte Wo in den Anschlusselementen T eingeführt und/oder befestigt, wobei es sich bei den Anschlusselementen T vorliegend um Schneid- und/oder Klemmanschlusselemente handelt.

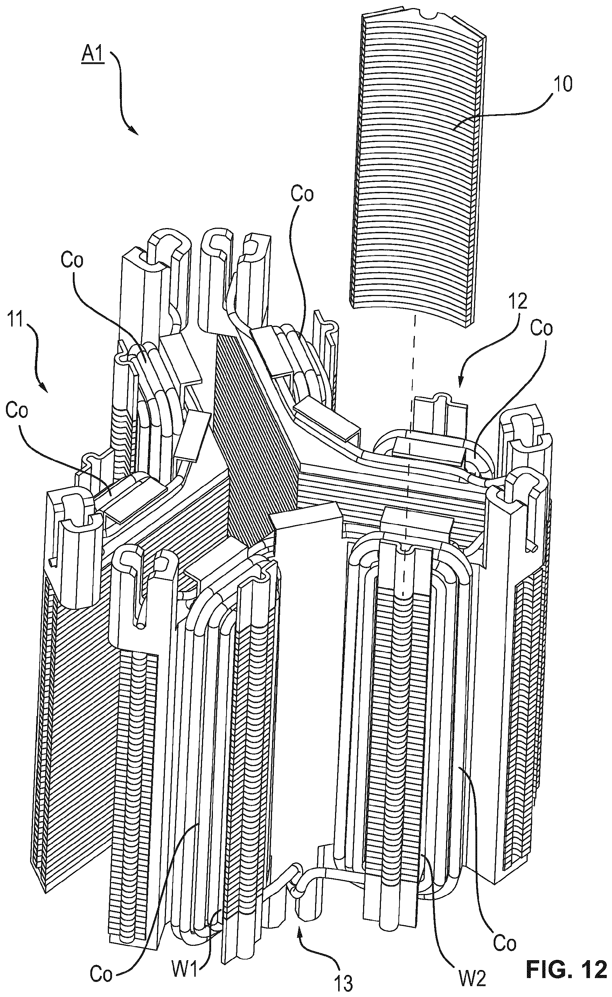

Fig. 12 zeigt eine dreidimensionale Ansicht der drei Statorsegmente 11, 12, 13 aus den Figuren 9 bis 11 in der ersten Anordnung A1 zusammen mit einem Polschuh 10 bevor der Polschuh 10 an einem der distalen Enden EW1, EW2 der Wicklungsträgervorsprünge W1, W2 angebracht und/oder aufgeschoben wird.

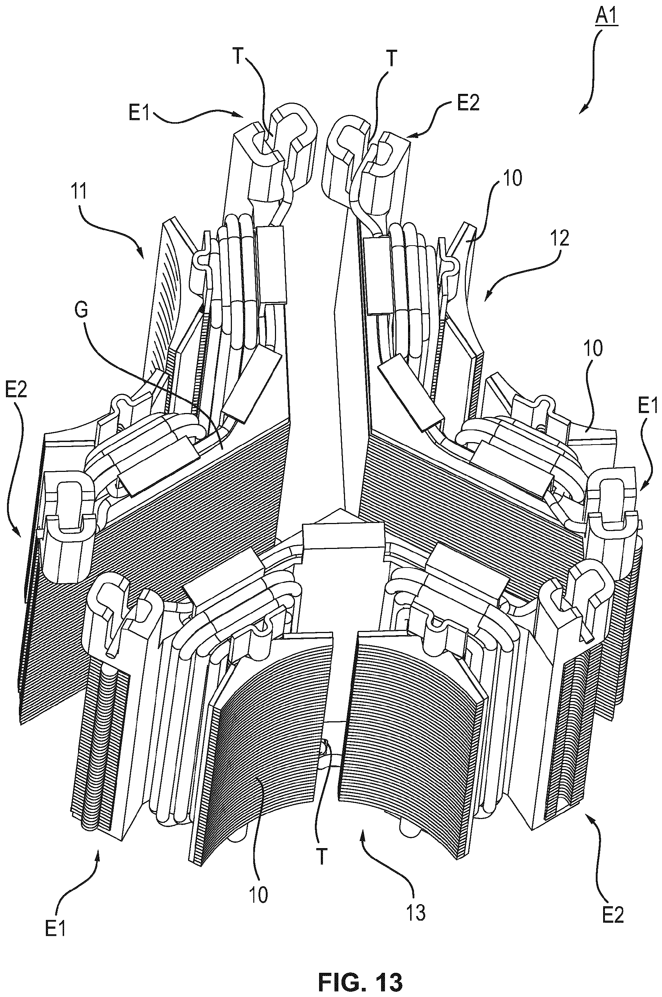

In Fig. 13 sind die drei Statorsegmente 11, 12, 13 aus den Figuren 9 bis 12 in einer dreidimensionalen Ansicht abgebildet, wobei die Statorsegmente 11, 12, 13 sich weiterhin in der ersten Anordnung A1 befinden. Darüber hinaus befinden sich die Statorsegmente 11, 12, 13 in einem Zustand, in dem nun alle Polschuhe 10 an den distalen Enden EW1, EW2 der Wicklungsträgervorsprünge W1, W2 angebracht sind.

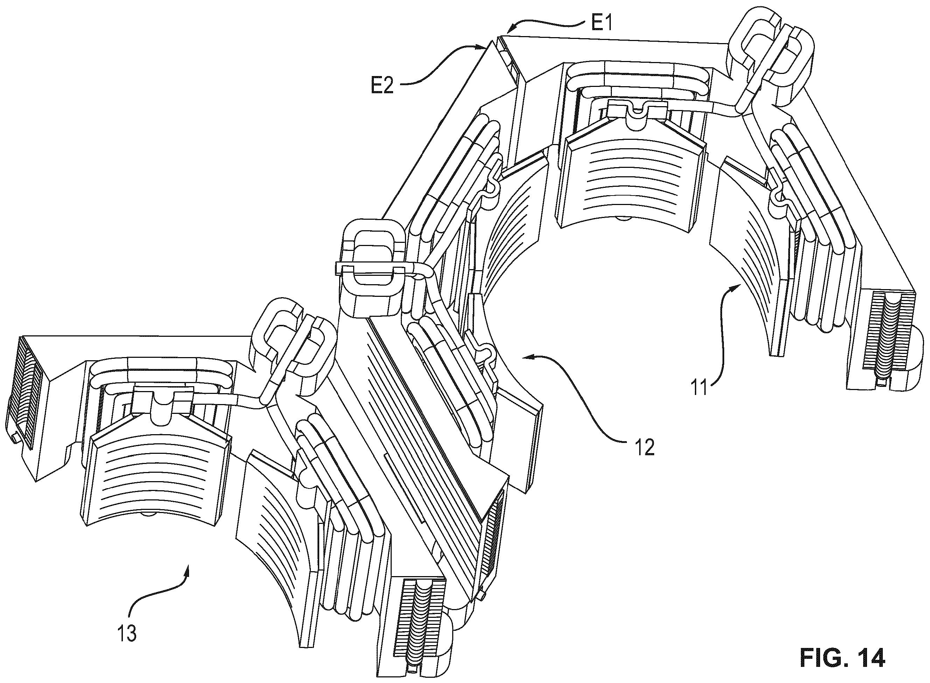

Fig. 14 zeigt eine dreidimensionale Ansicht der Statorsegmente 11, 12, 13 aus Fig. 13, wobei das Statorsegment 11 um zumindest im Wesentlichen 240° im Uhrzeigersinn um eine Langsachse rotiert ist, wobei die Langsachse/Drehachse parallel zur gedachten Zentrumsachse Z verläuft. Der Endbereich E1 des Statorsegments 11 ist mit dem Endbereich E2 des Statorsegments 12 durch die dort angebrachten Verbindungselemente C miteinander mechanisch verbunden.

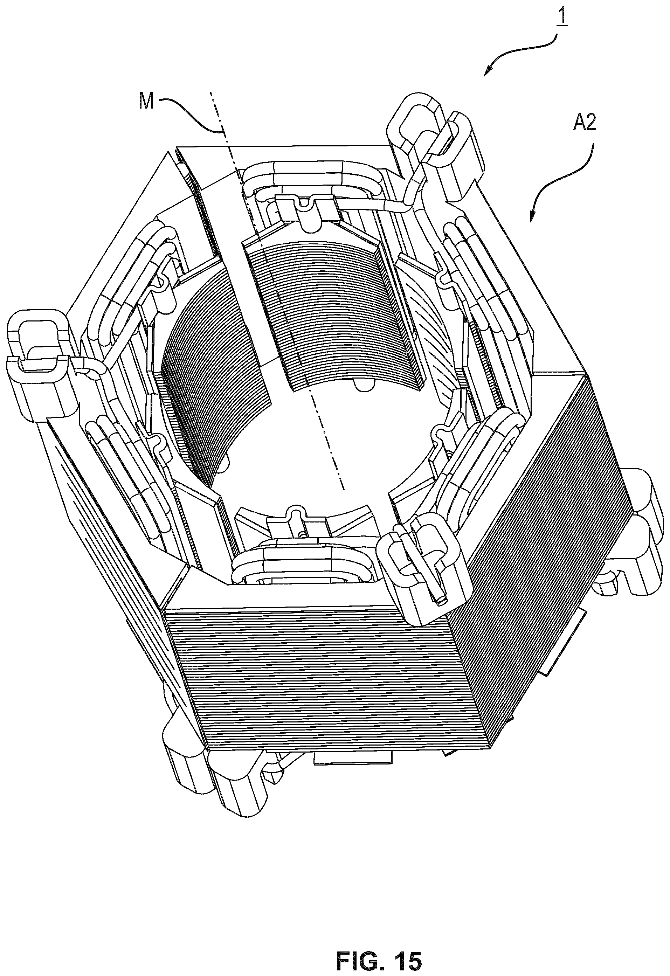

In Fig. 15 wird eine dreidimensionale Ansicht der Statorsegmente 11, 12, 13 aus Fig. 13 in der zweiten Anordnung A2 abgebildet. Das Statorsegment 13 ist um zumindest im Wesentlichen 240° gegen den Uhrzeigersinn um eine Langsachse rotiert, wobei die Langsachse/Drehachse parallel zur gedachten Mittelachse M verläuft.

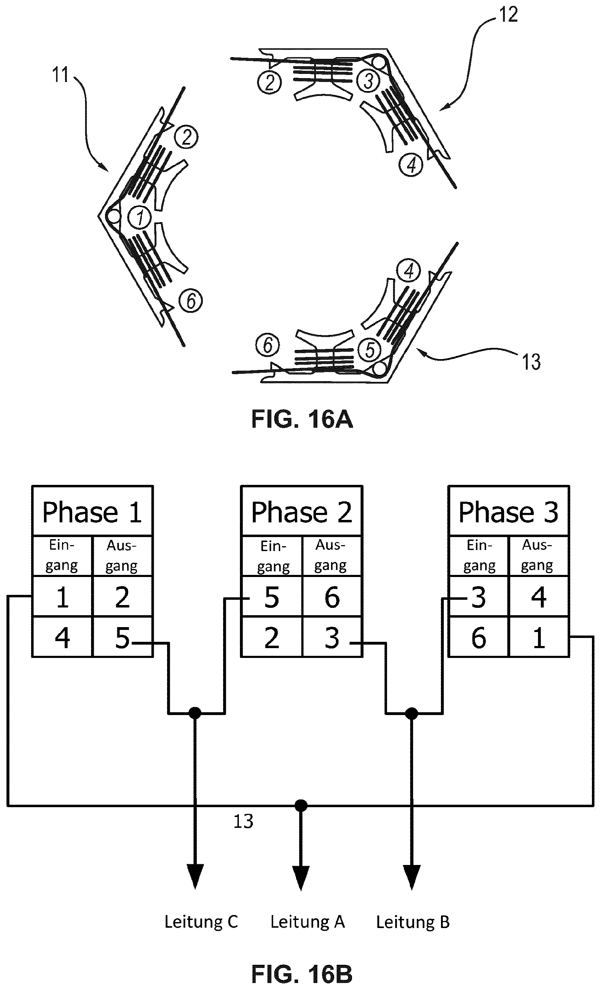

In Fig. 16a ist eine schematische Darstellung der Kontaktierung/Verbindung der einzelnen Wicklungen, mit denen die Wicklungsträgervorsprünge bewickelt sind, abgebildet, wobei die einzelnen Statorsegmente 11, 12, 13 separat (nicht zusammengefügt) dargestellt sind. Die drei Statorsegmente 11, 12, 13 weisen insgesamt sechs Anschlusselemente T auf, wobei die Wicklungsenden 1, 2, 3, 4, 5 und 6 der auf den Wicklungsträgervorsprüngen angebrachten Wicklungen Co durchnummeriert sind. Wicklungsenden mit den Nummern 2, 4 und 6 sind durch das Zusammensetzen der Statorsegmente 11, 12, 13 über die Anschlusselemente T elektrisch verbunden, weshalb diese dieselbe Nummer aufweisen.

Fig. 16b zeigt eine schematische Darstellung einer beispielhaften Beschaltung des in Fig. 16a abgebildeten, die Statorsegmente 11, 12, 13 aufweisenden Stators 1. In Fig. 16b sind drei Phasen abgebildet, wobei für jede Phase angezeigt ist, welches Wicklungsende 1, 2, 3, 4, 5 und 6 als Eingang (In) und welche als Ausgang (Out) zu beschalten ist. Die drei Phasen sin in Fig. 16b über drei Anschlüsse Line A, Line B und Line C beschaltet. Anschluss Line A ist mit Wicklungsende 1 verbunden. Anschluss Line B ist Wicklungsende 3 verbunden und Anschluss Line C ist mit Wicklungsende 5 verbunden.

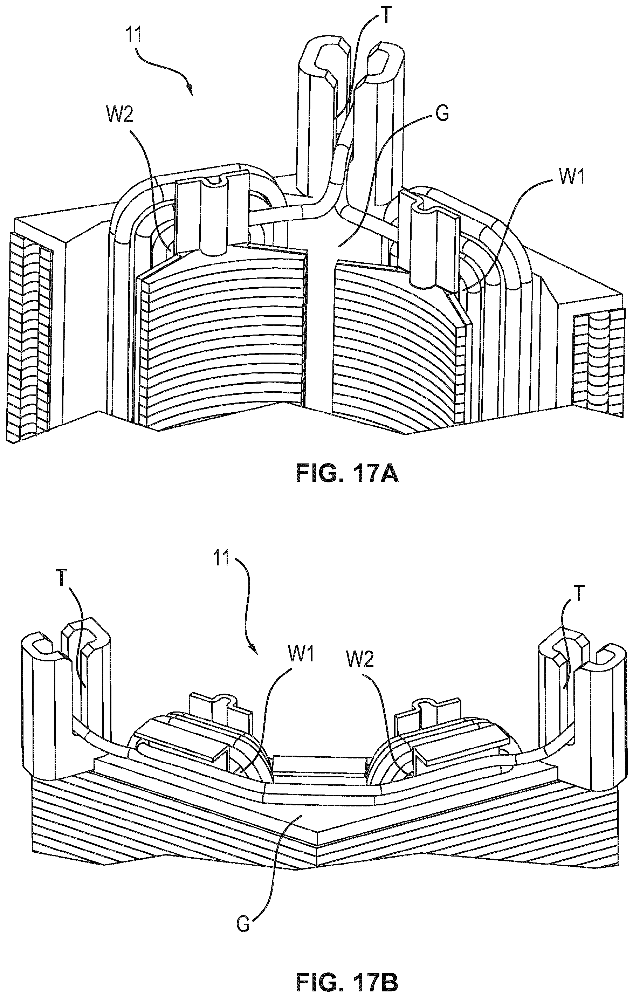

In Fig. 17a ist eine Detailansicht des unteren Bereichs eines Statorsegments 11 abgebildet. In Fig. 17a ist ein Anschlusselement T am unteren Bereich des Grundrahmenelements G zwischen den Wicklungsträgervorsprüngen W1, W2 dargestellt. Die Wicklungen verlaufen von den Wicklungsträgervorsprüngen W1, W2 auf dem Grundrahmenelement G zum Anschlusselement T hin, wobei die beiden Wicklungsenden in dem Anschlusselement T klemmend, elektrisch verbinden sind.

In Fig. 17b ist eine Detailansicht des oberen Bereichs eines Statorsegments 11 abgebildet. In Fig. 17b sind zwei Anschlusselemente T am unteren Bereich des Grundrahmenelements G jeweils an den Endbereichen E1, E2 des Statorsegments dargestellt. Die Wicklungen verlaufen von den Wicklungsträgervorsprüngen W1, W2 auf dem Grundrahmenelement G zu den Anschlusselement T hin. In den Anschlusselementen T sind die jeweiligen Wicklungsenden klemmend gehaltert und mit weiteren Wicklungsenden und/oder externen Kabeln/Leitungen klemmend und/oder schneidend verbunden werden.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Änderungen hiervon sind dem Fachmann geläufig.

### Bezugszeichenliste

- A1: erste Anordnung;
- A2: zweite Anordnung;
- C: Verbindungselemente;
- Co: Wicklung;
- E1: erster Endbereich der Statorsegmente;
- E2: zweiter Endbereich der Statorsegmente;
- EW1, EW2: distale Enden der Wicklungsträgervorsprünge
- G: Grundrahmenelement eines Statorsegments
- J: Jochring;
- M: Mittelachse der zweiten Anordnung;
- V: Grundrahmenelement;
- T: Anschlusselemente (Schneid- und/oder Klemm-Anschlusselemente);
- W1: erster Wicklungsträgervorsprung;
- W2: weiterer Wicklungsträgervorsprung;
- Z: Zentralachse;
- 1: Stator;
- 10: Polschuhe;
- 11, 12, 13: Statorsegment;
- 2: Wickelvorrichtung;
- 21, 22, 23: Wickelköpfe;

## Patentansprüche

1. Verfahren zum Herstellen eines Stators (1) für einen bürstenlosen Gleichstrommotor, wobei der Stator (1) eine Vielzahl von Statorsegmenten (11, 12, 13), insbesondere mindestens drei Statorsegmente (11, 12, 13) aufweist, die jeweils mindestens einen ersten Wicklungsträgervorsprung (W1) und mindestens einen weiteren Wicklungsträgervorsprung (W2) umfassen, die über einen Grundrahmenelement (G) verbunden sind, wobei die Wicklungsträgervorsprünge (W1, W2) derart ausgebildet sind, dass sie von dem Grundrahmenelement (G) hervorstehen und an distalen Enden (EW1, EW2) der Wicklungsträgervorsprünge (W1, W2) Polschuhe (10) anbringbar sind, wobei das Verfahren folgende Schritte umfasst:
a) Bereitstellen der Statorsegmente (11, 12, 13) in einer ersten, insbesondere sternförmigen, Anordnung (A1), wobei die Wicklungsträgervorsprünge (W1, W2) der Statorsegmente (11, 12, 13) außenliegend und die Grundrahmenelemente (G) der Statorsegmente (11, 12, 13) innenliegend relativ zu der ersten Anordnung (A1) angeordnet sind;
b) Bewickeln der ersten Wicklungsträgervorsprünge (W1) der Statorsegmente (11, 12, 13) mit einer Wickelvorrichtung (2);
c) Rotieren der Wickelvorrichtung (2) um eine Teilung der Wicklungsträgervorsprünge (W1, W2) der Statorsegmente (11, 12, 13);
d) Bewickeln der weiteren Wicklungsträgervorsprünge (W2) der Statorsegmente (11, 12, 13) mit der Wickelvorrichtung (2);
e) Anbringen der Polschuhe (10) an den distalen Enden (EW1, EW2) der einzelnen außenliegend angeordneten Wicklungsträgervorsprünge (W1, W2); und
f) Zusammensetzen der Statorsegmente (11, 12, 13) in einer zweiten, insbesondere ringförmigen, Anordnung (A2), in der die Wicklungsträgervorsprünge (W1, W2) der Statorsegmente (11, 12, 13) innenliegend und die Grundrahmenelemente (G) der Statorsegmente (11, 12, 13) außenliegend relativ zu der zweiten Anordnung (A2) angeordnet sind.

2. Verfahren nach Anspruch 1,
**dadurch gekennzeichnet, dass**
in Schritt b) das Bewickeln der ersten Wicklungsträgervorsprünge (W1) der Statorsegmente (11, 12, 13) zumindest im Wesentlichen gleichzeitig und/oder in Schritt d) das Bewickeln der weiteren Wicklungsträgervorsprünge (W2) der Statorsegmente (11, 12, 13) zumindest im Wesentlichen gleichzeitig durchgeführt wird/werden.

3. Verfahren nach Anspruch 1 oder 2,
**dadurch gekennzeichnet, dass**
in Schritt e) das Anbringen der Polschuhe (10) an den distalen Enden (EW1, EW2) der einzelnen Wicklungsträgervorsprünge (W1, W2) zumindest im Wesentlichen gleichzeitig stattfindet.

4. Verfahren nach einem der vorhergehenden Ansprüche,
**dadurch gekennzeichnet, dass**
das Verfahren ferner einen der folgenden Schritte umfasst:
- Vorerwärmen eines Jochrings (J) und Montieren des Jochrings (J) um die zusammengesetzte zweite Anordnung (A2) der Statorsegmente (11, 12, 13) herum; oder
- Gießen eines Jochrings (J) um die zusammengesetzte zweite Anordnung (A2) der Statorsegmente (11, 12, 13) herum.

5. Verfahren nach einem der vorhergehenden Ansprüche,
**dadurch gekennzeichnet, dass**
der Stator (1) drei Statorsegmente (11, 12, 13) mit jeweils zwei Wicklungsträgervorsprünge (W1, W2) aufweist, wobei in Schritt f) die Wicklungsträgervorsprünge (W1, W2) in der zweiten Anordnung (A2) auf einem Außenumfang einer Kreisfläche angeordnet sind, wobei die Wicklungsträgervorsprünge (W1, W2), insbesondere zumindest im Wesentlichen in einem Winkel von 60°, voneinander beabstandet von den Grundrahmenelementen (G) in Richtung einer Mittelachse der zweiten Anordnung (A2) hervorstehen.

6. Verfahren nach einem der vorhergehenden Ansprüche,
insbesondere nach Anspruch 5,
**dadurch gekennzeichnet, dass**
in den Schritten a) bis e) die Statorsegmente (11, 12, 13) des Stators (1) in der ersten Anordnung (A1) auf einem Außenumfang einer Sternfläche angeordnet sind.

7. Verfahren nach einem der vorhergehenden Ansprüche,
insbesondere nach Anspruch 5 oder 6,
**dadurch gekennzeichnet, dass**
in Schritt c) ein Rotieren einzelner Wickelköpfe (21, 22, 23) um einen Winkel, insbesondere von zumindest im Wesentlichen 60°, durchgeführt wird.

8. Verfahren nach einem der vorhergehenden Ansprüche,
insbesondere nach Anspruch 5 oder 6,
**dadurch gekennzeichnet, dass**
in Schritt f) mindestens zwei der drei Statorsegmente (11, 12, 13) um einen Winkel von zumindest im Wesentlichen 240° rotiert werden.

9. Verfahren nach einem der vorhergehenden Ansprüche,
**dadurch gekennzeichnet, dass**
die Wicklungsträgervorsprünge (W1, W2) in den Schritten b) und d) nach einem Flyerwickel-Verfahren bewickelt werden.

10. Verfahren nach einem der vorhergehenden Ansprüche,
**dadurch gekennzeichnet, dass**
das Verfahren ferner folgenden Schritt umfasst:
- Verbinden von freiliegenden Wicklungsenden der Statorsegmente (11, 12, 13) untereinander mit einer Vielzahl von Anschlusselementen (T), vorzugsweise mit mindestens sechs Anschlusselementen (T), die insbesondere als Schneid- und/oder Klemm-Anschlusselemente ausgestaltet sind.

11. Vorrichtung zum Herstellen eines Stators (1) für einen bürstenlosen Gleichstrommotor, wobei der Stator (1) eine Vielzahl von Statorsegmenten (11, 12, 13), insbesondere mindestens drei Statorsegmente (11, 12, 13) aufweist, die jeweils mindestens einen ersten Wicklungsträgervorsprung (W1) und mindestens einen weiteren Wicklungsbereich (W2) umfassen, die über einen Grundrahmenelement (G) verbunden sind, wobei die Wicklungsträgervorsprünge (W1, W2) derart ausgebildet sind, dass sie von dem Grundrahmenelement (G) hervorstehen und an distalen Enden (EW1, EW2) der Wicklungsträgervorsprünge (W1, W2) Polschuhe (10) anbringbar sind,
wobei die Vorrichtung eine Wickelvorrichtung (2) mit einer Vielzahl von Wickelköpfen (21) aufweist und dazu ausgestaltet ist, das Verfahren nach einem der vorhergehenden Ansprüche durchzuführen,
wobei insbesondere die Anzahl der Wickelköpfe (21) der Wickelvorrichtung (20) gleich der Anzahl der Statorsegmente (11, 12, 13) ist.

12. Stator (1) für einen bürstenlosen Gleichstrommotor,
der eine Vielzahl von Statorsegmenten (11, 12, 13), insbesondere mindestens drei Statorsegmente (11, 12, 13) aufweist, die jeweils mindestens einen ersten Wicklungsträgervorsprung (W1) und mindestens einen weiteren Wicklungsträgervorsprung (W2) umfassen, wobei Wicklungsträgervorsprünge (W1, W2) über einen Grundrahmenelement (G) verbunden sind,
wobei die Wicklungsträgervorsprünge (W1, W2) derart ausgebildet sind, dass sie von dem Grundrahmenelement (G) hervorstehen und an distalen Enden (EW1, EW2) der Wicklungsträgervorsprünge (W1, W2) Polschuhe (10) anbringbar sind.

13. Stator (1) nach Anspruch 12,
**dadurch gekennzeichnet, dass**
der Stator (1) durch ein Verfahren nach einem der Ansprüche 1 bis 10 und/oder in einer Vorrichtung nach Anspruch 11 hergestellt wird.

14. Stator (1) nach Anspruch 12 oder 13,
**dadurch gekennzeichnet, dass**
ein Füllfaktor der Wicklungsträgervorsprünge (W1, W2) des Stators (1) mehr als 40%, insbesondere mehr als 45%, vorzugsweise mehr als 50% beträgt und/oder der Innendurchmesser des Stators (1) kleiner als 38mm, kleiner insbesondere 36mm, vorzugsweise zumindest im Wesentlichen 34mm, ist.

15. Bürstenloser Gleichstrommotor zur Verwendung in Kraftfahrzeugen, insbesondere zur Verwendung als Schiebedach- und/oder Fensterheber- und/oder Jalousiemotor, mit einem Stator (1) nach einem der Ansprüche 12 bis 14, der durch das Verfahren nach einem der Ansprüche 1 bis 10 und/oder in einer Vorrichtung nach Anspruch 11 hergestellt ist.

## Claims

1. Method for producing a stator (1) for a brushless DC motor, wherein the stator (1) has a plurality of stator segments (11, 12, 13), in particular at least three stator segments (11, 12, 13), each comprising at least one first winding support protrusion (W1) and at least one additional winding support protrusion (W2) which are connected via a base frame element (G), wherein the winding support protrusions (W1, W2) are designed such that they protrude from the base frame element (G) and pole shoes (10) can be attached to distal ends (EW1, EW2) of the winding support protrusions (W1, W2), the method comprising the following steps:
a) providing the stator segments (11, 12, 13) in a first, in particular star-shaped, arrangement (A1), wherein the winding support protrusions (W1, W2) of the stator segments (11, 12, 13) are arranged on the outside and the base frame elements (G) of the stator segments (11, 12, 13) are arranged on the inside relative to the first arrangement (A1);
b) winding the first winding support protrusions (W1) of the stator segments (11, 12, 13) by means of a winding apparatus (2);
c) rotating the winding apparatus (2) about one division of the winding support protrusions (W1, W2) of the stator segments (11, 12, 13);
d) winding the additional winding support protrusions (W2) of the stator segments (11, 12, 13) by means of the winding apparatus (2);
e) attaching the pole shoes (10) to the distal ends (EW1, EW2) of the individual winding support protrusions (W1, W2) arranged on the outside; and
f) assembling the stator segments (11, 12, 13) in a second, in particular ring-shaped, arrangement (A2), in which the winding support protrusions (W1, W2) of the stator segments (11, 12, 13) are arranged on the inside and the base frame elements (G) of the stator segments (11, 12, 13) are arranged on the outside relative to the second arrangement (A2).

2. Method according to Claim 1,
**characterized in that**
in step b) the first winding support protrusions (W1) of the stator segments (11, 12, 13) are wound at least substantially simultaneously and/or in step d) the additional winding support protrusions (W2) of the stator segments (11, 12, 13) are wound at least substantially simultaneously.

3. Method according to Claim 1 or 2,
**characterized in that**
in step e) the pole shoes (10) are attached to the distal ends (EW1, EW2) of the individual winding support protrusions (W1, W2) at least substantially simultaneously.

4. Method according to any one of the preceding claims, **characterized in that**
the method also comprises one of the following steps:
- preheating a yoke ring (J) and mounting the yoke ring (J) around the assembled second arrangement (A2) of the stator segments (11, 12, 13); or
- casting a yoke ring (J) around the assembled second arrangement (A2) of the stator segments (11, 12, 13).

5. Method according to any one of the preceding claims, **characterized in that**
the stator (1) has three stator segments (11, 12, 13) each having two winding support protrusions (W1, W2), wherein in step f) the winding support protrusions (W1, W2) are arranged in the second arrangement (A2) on an outer circumference of a circular surface, wherein the winding support protrusions (W1, W2) protrude from the base frame elements (G) in the direction of a central axis of the second arrangement (A2) in particular at least substantially at an angle of 60° and in a manner spaced apart from one another.

6. Method according to any one of the preceding claims, in particular according to Claim 5,
**characterized in that**
in steps a) to e) the stator segments (11, 12, 13) of the stator (1) are arranged in the first arrangement (A1) on an outer circumference of a star surface.

7. Method according to any one of the preceding claims, in particular according to Claim 5 or 6,
**characterized in that**
in step c) individual winding heads (21, 22, 23) are rotated by an angle, in particular of at least substantially 60°.

8. Method according to any one of the preceding claims, in particular according to Claim 5 or 6,
**characterized in that**
in step f) at least two of the three stator segments (11, 12, 13) are rotated by an angle of at least substantially 240°.

9. Method according to any one of the preceding claims, **characterized in that**
the winding support protrusions (W1, W2) are wound in steps b) and d) using a flyer winding process.

10. Method according to any one of the preceding claims, **characterized in that**
the method also comprises the following step:
- connecting exposed winding ends of the stator segments (11, 12, 13) to one another by means of a plurality of connecting elements (T), preferably by means of at least six connecting elements (T), which are designed in particular as cutting and/or clamping connecting elements.

11. Apparatus for producing a stator (1) for a brushless DC motor, wherein the stator (1) has a plurality of stator segments (11, 12, 13), in particular at least three stator segments (11, 12, 13), each comprising at least one first winding support protrusion (W1) and at least one additional winding region (W2) which are connected via a base frame element (G), wherein the winding support protrusions (W1, W2) designed such that they protrude from the base frame element (G) and pole shoes (10) can be attached to distal ends (EW1, EW2) of the winding support protrusions (W1, W2),
wherein the apparatus has a winding apparatus (2) having a plurality of winding heads (21) and is configured to carry out the method according to any one of the preceding claims,
wherein in particular the number of winding heads (21) of the winding apparatus (20) is equal to the number of stator segments (11, 12, 13).

12. Stator (1) for a brushless DC motor,
which stator comprises a plurality of stator segments (11, 12, 13), in particular at least three stator segments (11, 12, 13), each comprising at least one first winding support protrusion (W1) and at least one additional winding support protrusion (W2), wherein winding support protrusions (W1, W2) are connected via a base frame element (G),
wherein the winding support protrusions (W1, W2) are designed such that they protrude from the base frame element (G) and pole shoes (10) can be attached to distal ends (EW1, EW2) of the winding support protrusions (W1, W2).

13. Stator (1) according to Claim 12,
**characterized in that**
the stator (1) is produced by a method according to any one of Claims 1 to 10 and/or in an apparatus according to Claim 11.

14. Stator (1) according to Claim 12 or 13, **characterized in that**
a filling factor of the winding support protrusions (W1, W2) of the stator (1) is more than 40%, in particular more than 45%, preferably more than 50%, and/or the inner diameter of the stator (1) is less than 38 mm, particularly less than 36 mm, preferably at least substantially 34 mm.

15. Brushless DC motor for use in motor vehicles, in particular for use as a sunroof and/or window lifter and/or window blind motor, having a stator (1) according to any one of Claims 12 to 14, which is produced by the method according to any one of Claims 1 to 10 and/or in an apparatus according to Claim 11.

## Revendications

1. Procédé de fabrication d'un stator (1) pour un moteur à courant continu sans balais, le stator (1) comportant une pluralité de segments de stator (11, 12, 13), en particulier au moins trois segments de stator (11, 12, 13), qui comprennent respectivement au moins une première saillie de support d'enroulement (W1) et au moins une autre saillie de support d'enroulement (W2), qui sont reliées par l'intermédiaire d'un élément de cadre de base (G), les saillies de support d'enroulement (W1, W2) étant conçues de telle sorte qu'elles dépassent de l'élément de cadre de base (G) et que des pièces polaires (10) puissent être fixées aux extrémités distales (EW1, EW2) des saillies de support d'enroulement (W1, W2), le procédé comprenant les étapes suivantes :
a) mise à disposition des segments de stator (11, 12, 13) dans un premier agencement (A1), notamment en étoile, les saillies de support d'enroulement (W1, W2) des segments de stator (11, 12, 13) étant agencées à l'extérieur et les éléments de cadre de base (G) des segments de stator (11, 12, 13) étant agencés à l'intérieur par rapport au premier agencement (A1) ;
b) enroulement des premières saillies de support d'enroulement (W1) des segments de stator (11, 12, 13) au moyen d'un dispositif d'enroulement (2) ;
c) rotation du dispositif d'enroulement (2) autour d'un pas des saillies de support d'enroulement (W1, W2) des segments de stator (11, 12, 13) ;
d) enroulement des autres saillies de support d'enroulement (W2) des segments de stator (11, 12, 13) au moyen du dispositif d'enroulement (2) ;
e) fixation des pièces polaires (10) aux extrémités distales (EW1, EW2) des saillies de support d'enroulement (W1, W2) individuelles agencées extérieurement ; et
f) assemblage des segments de stator (11, 12, 13) dans un deuxième agencement (A2), notamment annulaire, dans lequel les saillies de support d'enroulement (W1, W2) des segments de stator (11, 12, 13) sont agencées à l'intérieur et les éléments de cadre de base (G) des segments de stator (11, 12, 13) sont agencés à l'extérieur par rapport au deuxième agencement (A2).

2. Procédé selon la revendication 1,
**caractérisé en ce que**
lors de l'étape b), l'enroulement des premières saillies de support d'enroulement (W1) des segments de stator (11, 12, 13) est effectué au moins sensiblement simultanément et/ou, lors de l'étape d), l'enroulement des autres saillies de support d'enroulement (W2) des segments de stator (11, 12, 13) est effectué au moins sensiblement simultanément.

3. Procédé selon la revendication 1 ou 2, **caractérisé en ce que**
lors de l'étape e), la fixation des pièces polaires (10) aux extrémités distales (EW1, EW2) des saillies de support d'enroulement (W1, W2) individuelles est effectuée au moins sensiblement simultanément.

4. Procédé selon l'une des revendications précédentes, **caractérisé en ce que**
le procédé comprend en outre l'une des étapes suivantes :
- préchauffage d'un anneau de culasse (J) et montage de l'anneau de culasse (J) autour du deuxième agencement assemblé (A2) des segments de stator (11, 12, 13) ; ou
- moulage d'un anneau de culasse (J) autour du deuxième agencement assemblé (A2) des segments de stator (11, 12, 13).

5. Procédé selon l'une des revendications précédentes, **caractérisé en ce que**
le stator (1) comporte trois segments de stator (11, 12, 13) présentant respectivement deux saillies de support d'enroulement (W1, W2), les saillies de support d'enroulement (W1, W2) étant agencées lors de l'étape f) dans le deuxième agencement (A2) sur une circonférence extérieure d'une surface circulaire, les saillies de support d'enroulement (W1, W2) faisant saillie à partir des éléments de cadre de base (G) en direction d'un axe central du deuxième agencement (A2) de manière à être espacées les unes des autres, en particulier au moins sensiblement selon un angle de 60°.

6. Procédé selon l'une des revendications précédentes, en particulier selon la revendication 5,
**caractérisé en ce que**
lors des étapes a) à e), les segments de stator (11, 12, 13) du stator (1) sont agencés dans le premier agencement (A1) sur une circonférence extérieure d'une surface en étoile.

7. Procédé selon l'une des revendications précédentes, en particulier selon la revendication 5 ou 6, **caractérisé en ce que**
lors de l'étape c), une rotation des têtes d'enroulement (21, 22, 23) individuelles d'un certain angle, en particulier d'au moins sensiblement 60°, est effectuée.

8. Procédé selon l'une des revendications précédentes, en particulier selon la revendication 5 ou 6, **caractérisé en ce que**
lors de l'étape f), au moins deux des trois segments de stator (11, 12, 13) sont soumis à une rotation d'un angle d'au moins sensiblement 240°.

9. Procédé selon l'une des revendications précédentes, **caractérisé en ce que**
les saillies de support d'enroulement (W1, W2) sont enroulées lors des étapes b) et d) par un procédé d'enroulement à ailettes.

10. Procédé selon l'une des revendications précédentes, **caractérisé en ce que**
le procédé comprend en outre les étapes suivantes :
- connexion les unes aux autres des extrémités d'enroulement libres des segments de stator (11, 12, 13) au moyen d'une pluralité d'éléments de connexion (T), de préférence au moyen d'au moins six éléments de connexion (T), qui sont conçus en particulier sous forme d'éléments de connexion autodénudants et/ou à serrage.

11. Dispositif de fabrication d'un stator (1) pour un moteur à courant continu sans balais, le stator (1) comportant une pluralité de segments de stator (11, 12, 13), en particulier au moins trois segments de stator (11, 12, 13), qui comprennent respectivement au moins une première saillie de support d'enroulement (W1) et au moins une autre zone d'enroulement (W2), qui sont reliées par l'intermédiaire d'un élément de cadre de base (G), les saillies de support d'enroulement (W1, W2) étant conçues de telle sorte qu'elles dépassent de l'élément de cadre de base (G) et que des pièces polaires (10) puissent être fixées aux extrémités distales (EW1, EW2) des saillies de support d'enroulement (W1, W2),
le dispositif comportant un dispositif d'enroulement (2) comprenant une pluralité de têtes d'enroulement (21) et étant configuré pour mettre en œuvre le procédé selon l'une des revendications précédentes,
le nombre des têtes d'enroulement (21) du dispositif d'enroulement (20) étant en particulier égal au nombre des segments de stator (11, 12, 13).

12. Stator (1) pour un moteur à courant continu sans balais,
qui comporte une pluralité de segments de stator (11, 12, 13), en particulier au moins trois segments de stator (11, 12, 13), qui comprennent respectivement au moins une première saillie de support d'enroulement (W1) et au moins une autre saillie de support d'enroulement (W2), les saillies de support d'enroulement (W1, W2) étant reliées par l'intermédiaire d'un élément de cadre de base (G),
les saillies de support d'enroulement (W1, W2) étant conçues de telle sorte qu'elles dépassent de l'élément de cadre de base (G) et que des pièces polaires (10) puissent être fixées aux extrémités distales (EW1, EW2) des saillies de support d'enroulement (W1, W2).

13. Stator (1) selon la revendication 12,
**caractérisé en ce que**
le stator (1) est fabriqué par un procédé selon l'une des revendications 1 à 10 et/ou dans un dispositif selon la revendication 11.

14. Stator (1) selon la revendication 12 ou 13, **caractérisé en ce que**
un taux de remplissage des saillies de support d'enroulement (W1, W2) du stator (1) est supérieur à 40 %, en particulier supérieur à 45 %, de préférence supérieur à 50 %, et/ou **en ce que** le diamètre intérieur du stator (1) est inférieur à 38 mm, en particulier inférieur à 36 mm, de préférence au moins sensiblement de 34 mm.

15. Moteur à courant continu sans balais pour une utilisation dans des véhicules automobiles, en particulier pour une utilisation comme moteur de toit coulissant et/ou de lève-vitre et/ou de store, comprenant un stator (1) selon l'une des revendications 12 à 14, qui est fabriqué par le procédé selon l'une des revendications 1 à 10 et/ou dans un dispositif selon la revendication 11.
